# FASCICULE DE BREVET EUROPEEN

(11) **EP 3 440 037 B1**
(45) Date de publication et mention de la délivrance du brevet: **29.04.2020**
(21) Numéro de dépôt: 17724849.9
(22) Date de dépôt: 27.03.2017
(51) Int. Cl.: C06D 3/00

(54) **COMPOSITION FUMIGÈNE EFFICACE DANS LES DOMAINES VISIBLE ET INFRAROUGE**
RAUCHERZEUGENDE ZUSAMMENSETZUNG MIT WIRKSAMKEIT IM SICHTBAREN UND INFRAROTEN BEREICH
SMOKE GENERATING COMPOSITION EFFECTIVE IN THE VISIBLE AND INFRARED RANGES

(30) Priorité: 04.04.2016 FR 1600574
(43) Date de publication de la demande: 13.02.2019
(73) Titulaire: Nexter Munitions, 78034 Versailles Cedex (FR)
(72) Inventeur: LAMY-BRACQ, Peggy, 18023 Bourges (FR); DUFOUR, Yohan, 18023 Bourges (FR)
(74) Mandataire: Cabinet Chaillot
(86) Numéro de dépôt international: PCT/FR2017/050701
(87) Numéro de publication internationale: WO 2017/174895

(56) Documents cités:
- EP-A1- 0 072 276
- EP-A1- 0 639 547
- DD-A5- 300 420
- DE-A1-102007 019 968
- US-A- 5 389 308

## Description

Le domaine technique de l'invention est celui des compositions pyrotechniques fumigènes permettant de réaliser un masquage dans les domaines visible et infrarouge.

Des fumigènes couvrant un large spectre de masquage sont connus depuis longtemps. Par large spectre de masquage on entend un masquage qui est efficace vis à vis des rayonnements du domaine visible jusqu'à l'infrarouge lointain, soit d'une longueur d'onde de 0,4 micromètres à 14 micromètres.

Le brevet FR2583037 décrit ainsi une composition associant un oxydant, un réducteur et un générateur de particules de carbone constitué par un composé aromatique chloré. Cette composition est très efficace du point de vue du masquage, tant pour le spectre visible que pour les domaines infrarouges : gamme 3-5 micromètres et gamme 8-12 micromètres. Elle présente cependant l'inconvénient de mettre en œuvre une substance, le naphtalène chloré, qui est aujourd'hui interdite de fabrication et d'emploi par l'Union Européenne.

Il existe un besoin de définir, pour la protection des forces terrestres et navales, de nouvelles compositions pyrotechniques de masquage pouvant assurer un masquage dans un domaine spectral large tout en ne mettant en œuvre que des composants peu toxiques.

C'est le but de l'invention que de proposer une nouvelle gamme de compositions pyrotechniques qui peut être réalisée à partir de matériaux présentant pas ou peu de risques et qui a cependant une certaine efficacité de masquage large bande.

La composition proposée par l'invention génère par ailleurs des fumées de toxicité réduite.

Ainsi l'invention a pour objet une composition fumigène efficace dans les domaines visible et infrarouge comprenant au moins un oxydant et au moins un réducteur ainsi qu'au moins un agent fumigène générateur de particules de carbone, composition qui est caractérisée en ce qu'elle comprend comme agent fumigène du poly(chlorure de vinyle) surchloré (C-PVC), le taux de chlore de cet agent fumigène étant compris entre 57% et 70% de la masse de poly(chlorure de vinyle) surchloré, la composition comprenant 49% à 90% en masse de poly(chlorure de vinyle) surchloré (C-PVC) par rapport à la masse totale de la composition.

Il était connu de mettre en œuvre le polychlorure de vinyle (PVC) comme liant dans des compositions pyrotechniques. Ce matériau est en effet une matière plastique d'usage courant qui peut facilement être associée à d'autres composants en mettant en œuvre une granulation en présence d'un solvant. La plupart du temps le PVC est dissous dans un solvant puis mélangé avec les autres constituants pour réaliser un enrobage. Puis la composition est granulée et séchée.

Le brevet DE2451701 décrit ainsi une composition fumigène à base de paraffine chlorée et pouvant être enrobée dans un liant polymère tel que le PVC ou l'acétate de vinyle. Ce liant permet d'améliorer la résistance mécanique de la composition et il est utilisé dans des proportions modérées (taux inférieur à 30% de la masse totale).

Le brevet DE102007019968 ne décrit pas une composition fumigène mais une composition pyrotechnique énergétique, par exemple une composition d'allumage associant magnésium, perchlorate d'ammonium ou de potassium et un liant. Ce document mentionne le PVC comme un état de l'art des liants classiques pour réaliser les compositions pyrotechniques. Lorsque le PVC est ainsi utilisé comme liant d'une composition pyrotechnique, il est mis en œuvre en quantité modérée (taux inférieur à 30% de la masse totale).

Dans tous les cas le liant décrit par ces brevets est un polychlorure de vinyle et non un poly(chlorure de vinyle) surchloré (C-PVC).

On connait également par les brevets EP0639547 et US5389308 une composition pyrotechnique fumigène pouvant engendrer un nuage opaque aux rayons infrarouges. Cette composition associe sous la forme d'un comprimé : 35% à 65% en masse d'un matériau aromatique particulier (tel que l'anthraquinone, l'anhydride phtalique ou le phenothiazine), 10 à 25% en masse de poudre de magnésium, 5 à 35% en masse d'un polymère fluoré et 5% à 15% en masse de paraffine chlorée. L'association Magnésium/Polymère fluoré constitue la composition d'allumage du matériau aromatique. Cette composition fumigène comprend de la paraffine chlorée qui constitue un modérateur de la combustion. Le matériau qui génère le nuage de masquage, c'est le matériau aromatique (anthraquinone par exemple). La paraffine surchlorée ne contribue pas au nuage de masquage mais permet de ralentir la réaction, ce qui joue sur la durabilité du nuage. Le taux de paraffine chlorée dans la composition reste donc réduit (5% à 15% en masse) contre 35% à 65% en masse pour le matériau aromatique formant le nuage. Ce document cite pour un seul exemple l'utilisation de PVC surchloré comme modérateur de combustion en lieu et place de la paraffine chlorée (le PVC surchloré n'est pas une paraffine chlorée). Mais la fonction du PVC surchloré dans cet exemple est toujours une fonction de modérateur de combustion et son taux reste réduit (15% en masse).

Les C-PVC résultent d'une substitution plus ou moins forte du chlore à l'hydrogène dans les chaines du poly(chlorure de vinyle) (PVC). Ces matériaux peuvent avoir un taux de chlore en masse qui peut varier de 57% à 74%. Ils ont pour particularité d'être plus ductiles que le PVC ce qui les rend utilisables pour la fabrication de tuyauteries.

Une conséquence de la sur-chloration du PVC est qu'elle permet de disposer de davantage de chlore lors de la réaction. Ce chlore forme avec les réducteurs de type métal des chlorures métalliques (ex : MgCl, MgCl₂...) qui ont des modes propres de vibrations dans les domaines de longueurs d'ondes infrarouge que l'on cherche à masquer. Une telle disposition permet d'améliorer le masquage.

D'une façon surprenante et inhabituelle, il a été constaté qu'en utilisant un poly(chlorure de vinyle) surchloré (C-PVC) on engendrait de façon stable et soutenue un aérosol composé majoritairement de particules de carbone présentant des tailles de particules comprises entre 0,8 et 10 micromètres qui assure un masquage ayant une certaine efficacité dans les domaines visibles et infrarouge proches et lointains.

En outre les composants engendrés ont une toxicité réduite. Les principaux produits de combustion de ce type de composition sont en effet des particules solides de carbone, de chlorures métalliques et d'oxydes métalliques. La quantité de chlorure d'hydrogène générée par les compositions les plus riches en chlore est de l'ordre de 2 mg/m³ soit très largement inférieure à la valeur limite d'exposition mentionnée par l'INRS (Institut National de Recherche et de Sécurité) dans son aide Mémoire Technique ED 984 de juillet 2012 qui est de 7,6 mg/m³. Cette valeur est également très éloignée des seuils des premiers effets létaux et des effets irréversibles mentionnés par l'INERIS (Institut National de l'Environnement industriel et des Risques) dans sa fiche de 2003, seuils qui sont respectivement de 1937 mg/m³ et 358 mg/m³.

Pour assurer la combustion du C-PVC, il est nécessaire de l'associer à une composition oxydo réductrice suffisamment énergétique pour permettre l'allumage de la composition et le maintien en combustion de celle-ci.

Le C-PVC est en effet un matériau relativement peu inflammable et qui doit être porté à une température largement supérieure à sa température de décomposition (180°C) pour permettre une combustion régulière et entretenue de la composition et ainsi engendrer de la fumée.

La composition selon l'invention comprend ainsi de 49% à 90% en masse de poly(chlorure de vinyle) surchloré (C-PVC) par rapport à la masse totale de la composition.

Le C-PVC ne joue donc pas le rôle d'un simple liant pour une composition pyrotechnique mais il forme en lui-même l'agent fumigène de la composition.

On pourra ainsi associer dans la composition :
5% à 30% en masse de réducteur,
5% à 29% en masse d'oxydant,
49% à 90% d'agent fumigène,
0% à 30% de liant et
0% à 5% d'additifs.

Le réducteur pourra être choisi parmi les corps ou composés suivants : Magnésium, Aluminium, Siliciure de Calcium ou leurs mélanges.

L'oxydant pourra être choisi parmi les composés suivants : perchlorate de potassium (KClO4), nitrate de potassium (KNO3), permanganate de potassium (KMnO4), periodate de potassium (KIO4), poly(fluorure de vinylidène)(PVDF), polytétrafluoroéthylène (PTFE).

On pourra ou non mettre en œuvre un matériau liant si la mise en œuvre le nécessite et principalement pour des raisons de tenue mécanique.

Le liant pourra être choisi parmi les liants suivants : résines thermoplastiques, résine polyuréthane, résines époxydes, polybutadiène hydroxytéléchélique (PBHT), dinitroanisole.

Le Dinitroanisole est un liant énergétique qui permettra d'accélérer la vitesse de combustion de la composition pour permettre d'ajuster le temps de fonctionnement du produit dans lequel la composition est intégrée. L'utilisation de résine thermoplastique sera préférée pour les mises en œuvre in situ.

On pourra aussi utiliser des additifs (0 à 5% en masse). Les additifs pourront être des composants permettant de faciliter la mise en œuvre (coulabilité et compressibilité), par exemple le graphite (granulométrie : entre 2 et 10 micromètres), l'aérosil, le stéarate de magnésium ou de calcium...
- La figure la montre l'évolution du coefficient de masquage pour la gamme de longueur d'onde de 3 à 5 micromètres pour la composition suivant l'exemple 1, l'axe des abscisses représente le temps en secondes et l'axe des ordonnées le coefficient de masquage en % ;
- La figure 1b montre l'évolution du coefficient de masquage pour la gamme de longueur d'onde de 8 à 12 micromètres pour la composition suivant l'exemple 1, l'axe des abscisses représente le temps en secondes et l'axe des ordonnées le coefficient de masquage en % ;
- La figure 2a montre l'évolution du coefficient de masquage pour la gamme de longueur d'onde de 3 à 5 micromètres pour la composition suivant l'exemple 2, l'axe des abscisses représente le temps en secondes et l'axe des ordonnées le coefficient de masquage en % ;
- La figure 2b montre l'évolution du coefficient de masquage pour la gamme de longueur d'onde de 8 à 12 micromètres pour la composition suivant l'exemple 2, l'axe des abscisses représente le temps en secondes et l'axe des ordonnées le coefficient de masquage en % ;
- La figure 3a montre l'évolution du coefficient de masquage pour la gamme de longueur d'onde de 3 à 5 micromètres pour la composition suivant l'exemple 3, l'axe des abscisses représente le temps en secondes et l'axe des ordonnées le coefficient de masquage en % ;
- La figure 3b montre l'évolution du coefficient de masquage pour la gamme de longueur d'onde de 8 à 12 micromètres pour la composition suivant l'exemple 3, l'axe des abscisses représente le temps en secondes et l'axe des ordonnées le coefficient de masquage en % ;
- La figure 4a montre l'évolution du coefficient de masquage pour la gamme de longueur d'onde de 3 à 5 micromètres pour la composition suivant l'exemple 4, l'axe des abscisses représente le temps en secondes et l'axe des ordonnées le coefficient de masquage en % ;
- La figure 4b montre l'évolution du coefficient de masquage pour la gamme de longueur d'onde de 8 à 12 micromètres pour la composition suivant l'exemple 4, l'axe des abscisses représente le temps en secondes et l'axe des ordonnées le coefficient de masquage en %.

On a réalisé un certain nombre de compositions selon l'invention qui ont été testées afin de vérifier leurs performances de masquage dans les deux gammes de longueur d'onde infrarouge 3 à 5 micromètres et 8 à 12 micromètres.

Toutes les compositions ont été réalisées suivant l'un ou l'autre des procédés suivants :
Voie sèche, c'est à dire mélange à sec des différents constituants puis compression. Ce procédé est utilisé lorsque la composition est dépourvue de liant, c'est à dire pour les exemples 2, 3 et 4.

Voie humide, c'est à dire mélange des espèces solides avec le liant sous forme liquide, malaxage, granulage puis séchage. Ce procédé est utilisé lorsque la composition comporte un liant, c'est à dire pour l'exemple 1.

Les essais de masquage infrarouge ont été réalisés dans un tunnel équipé d'une source froide, d'une source chaude et de deux caméras thermiques (1 caméra 3-5 micromètres et 1 caméra 8-12 micromètres). La source froide est une plaque d'acier à température ambiante. La source chaude est une source de type corps noir présentant une température d'environ 200°C. Le masquage est évalué en comparant l'effet du passage de la fumée devant les sources thermiques (froide et chaude) sur la température vue par les caméras thermiques.

### EXEMPLE 1

On a réalisé la composition suivante (proportions des constituants par rapport à la masse totale de la composition) :
15% de Magnésium,
8% de perchlorate de potassium,
54% de poly(chlorure de vinyle) surchloré,
21% de résine polyuréthane,
2% de graphite.

La figure la montre les performances de masquage de cette composition vis à vis d'un rayonnement infrarouge dans la gamme 3 à 5 micromètres.

On constate que cette composition assure un masquage de plus de 50% sur une période de temps de 80 secondes. A titre comparatif la composition décrite par le brevet FR2583037 (générateur de carbone naphtalène chloré), assure un masquage d'environ 60% pendant 40s sur une configuration proche (sensiblement la même masse de bloc).

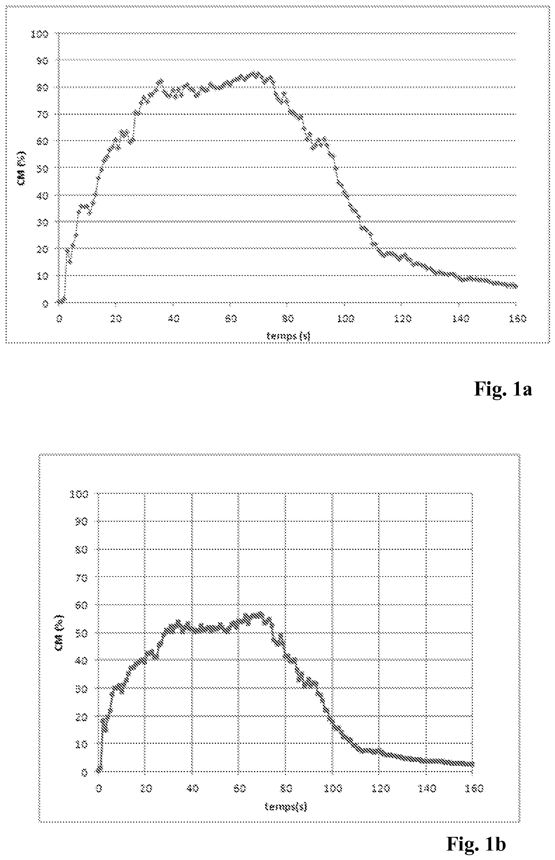

La figure 1b montre les performances de masquage de cette même composition vis à vis d'un rayonnement infrarouge dans la gamme 8 à 12 micromètres.

On constate que le masquage est supérieur à 50% pendant une durée de plus de 40 secondes. A titre comparatif la composition décrite par le brevet FR2583037 (générateur de carbone naphtalène chloré), assure un masquage d'environ 60% pendant 40s sur une configuration proche (sensiblement la même masse de bloc).

### EXEMPLE 2

On a réalisé la composition suivante (proportions des constituants par rapport à la masse totale de la composition) :
20% de Siliciure de Calcium,
29% de nitrate de potassium,
49% de poly(chlorure de vinyle) surchloré,
2% de graphite.

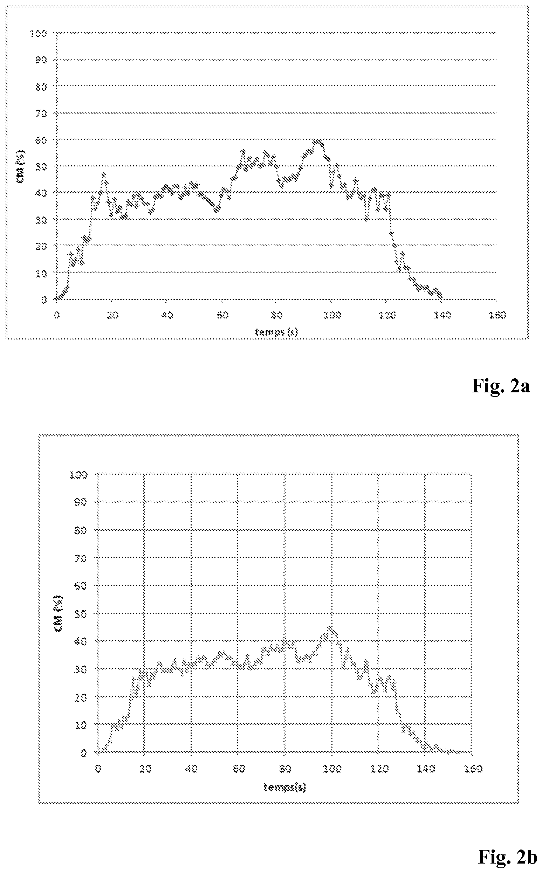

La figure 2a montre les performances de masquage de cette composition vis à vis d'un rayonnement infrarouge dans la gamme 3 à 5 micromètres.

On constate que cette composition assure un masquage de plus de 40% sur une période de temps de 70 secondes.

La figure 2b montre les performances de masquage de cette même composition vis à vis d'un rayonnement infrarouge dans la gamme 8 à 12 micromètres.

On constate que le masquage est supérieur à 30% pendant une durée de plus de 80 secondes.

Ces performances sont moindres que celles de la composition selon l'exemple 1 en termes de performances de masquage mais restent intéressantes. La durée de masquage est supérieure.

### EXEMPLE 3

On a réalisé la composition suivante (proportions des constituants par rapport à la masse totale de la composition) :
20% de Magnésium,
10% de perchlorate de potassium,
70% de poly(chlorure de vinyle) surchloré.

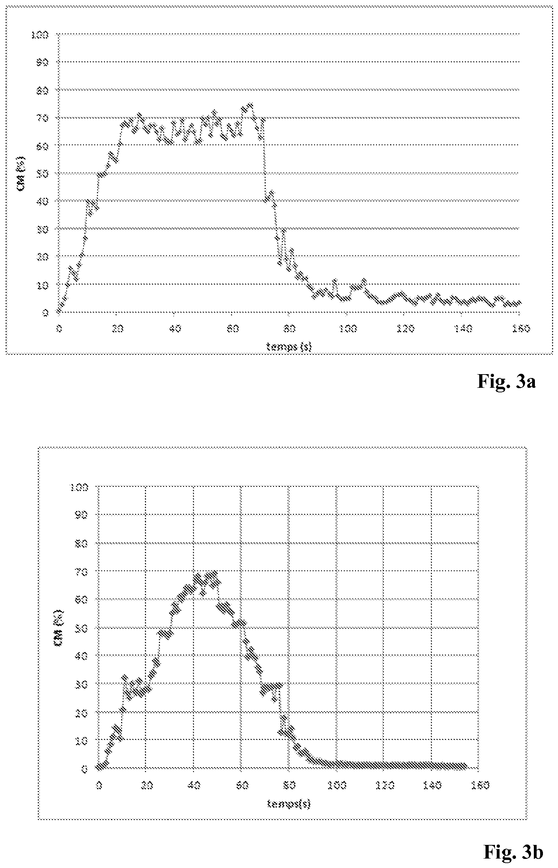

La figure 3a montre les performances de masquage de cette composition vis à vis d'un rayonnement infrarouge dans la gamme 3 à 5 micromètres.

On constate que cette composition assure un masquage de plus de 65% sur une période de temps de 50 secondes.

La figure 3b montre les performances de masquage de cette même composition vis à vis d'un rayonnement infrarouge dans la gamme 8 à 12 micromètres.

On constate que le masquage est supérieur à 30% pendant une durée de plus de 50 secondes.

### EXEMPLE 4

On a réalisé la composition suivante (proportions des constituants par rapport à la masse totale de la composition) :
20% de Magnésium,
20% de perchlorate de potassium,
60% de poly(chlorure de vinyle) surchloré

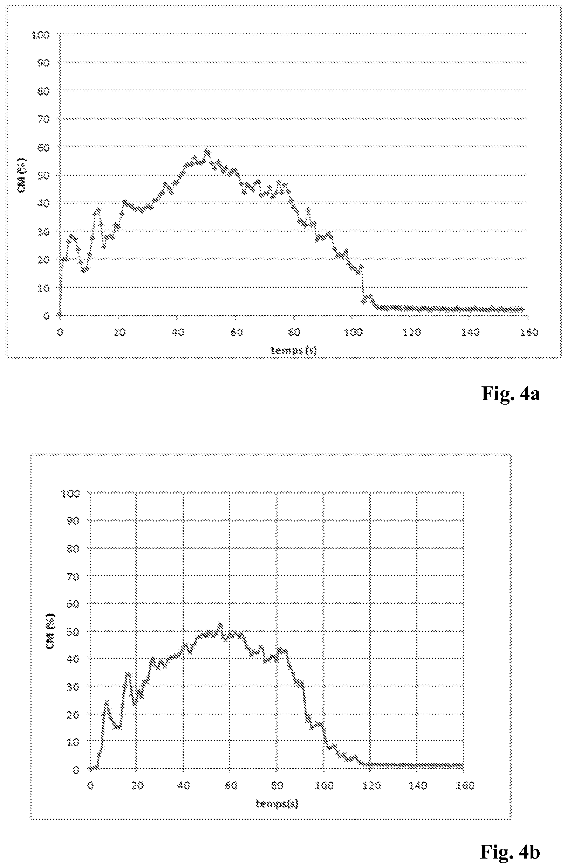

La figure 4a montre les performances de masquage de cette composition vis à vis d'un rayonnement infrarouge dans la gamme 3 à 5 micromètres.

On constate que cette composition assure un masquage de plus de 40% sur une période de temps de 60 secondes.

La figure 4b montre les performances de masquage de cette même composition vis à vis d'un rayonnement infrarouge dans la gamme 8 à 12 micromètres.

On constate que le masquage est supérieur à 30% pendant une durée de plus de 70 secondes.

Les performances de masquage obtenues (en taux et en durée) sont intéressantes.

## Revendications

1. Composition fumigène efficace dans les domaines visible et infrarouge comprenant au moins un oxydant et au moins un réducteur ainsi qu'au moins un agent fumigène générateur de particules de carbone, composition ***caractérisée en ce qu***'elle comprend comme agent fumigène du poly(chlorure de vinyle) surchloré (C-PVC), le taux de chlore de cet agent fumigène étant compris entre 57% et 70% de la masse de poly(chlorure de vinyle) surchloré, la composition comprenant 49% à 90% en masse de poly(chlorure de vinyle) surchloré (C-PVC) par rapport à la masse totale de la composition.

2. Composition fumigène selon la revendication 1, **caractérisée en ce qu'**elle comprend 5% à 30% en masse de réducteur, 5% à 29% en masse d'oxydant, 0% à 30% de liant et 0% à 5% d'additifs.

3. Composition fumigène selon la revendication 2, **caractérisée en ce que** le réducteur est choisi parmi les corps ou composés suivants : Magnésium, Aluminium, Siliciure de Calcium ou leurs mélanges.

4. Composition fumigène selon la revendication 3, **caractérisée en ce que** l'oxydant est choisi parmi les composés suivants : perchlorate de potassium (KClO4), le nitrate de potassium (KNO3), le permanganate de potassium (KMnO4), le periodate de potassium (KIO4), le poly(fluorure de vinylidène)(PVDF), le polyfluoroéthylène (PTFE).

5. Composition fumigène selon une des revendications 2 à 4, **caractérisée en ce que** le liant est choisi parmi les résines thermoplastiques, résine polyuréthane, les résines époxydes, le polybutadiène hydroxytéléchélique (PBHT), le dinitroanisole.

6. Composition fumigène selon une des revendications 1 à 5, **caractérisée en ce qu'**elle comprend (proportions par rapport à la masse totale de la composition) :
15% de Magnésium,
8% de perchlorate de potassium,
54% de poly(chlorure de vinyle) surchloré,
21% de résine polyuréthane,
2% de graphite.

7. Composition fumigène selon une des revendications 1 à 5, **caractérisée en ce qu'**elle comprend (proportions par rapport à la masse totale de la composition) :
20% de Siliciure de Calcium,
29% de nitrate de potassium,
49% de poly(chlorure de vinyle) surchloré,
2% de graphite.

8. Composition fumigène selon une des revendications 1 à 5, **caractérisée en ce qu'**elle comprend (proportions par rapport à la masse totale de la composition) :
20% de Magnésium,
10% de perchlorate de potassium,
70% de poly(chlorure de vinyle) surchloré.

9. Composition fumigène selon une des revendications 1 à 5, **caractérisée en ce qu'**elle comprend (proportions par rapport à la masse totale de la composition) :
20% de Magnésium,
20% de perchlorate de potassium,
60% de poly(chlorure de vinyle) surchloré.

## Patentansprüche

1. Raucherzeugende Zusammensetzung, die im sichtbaren und Infrarotbereich wirksam ist, umfassend mindestens ein Oxidationsmittel und mindestens ein Reduktionsmittel sowie mindestens ein raucherzeugendes Mittel, das Kohlenstoffpartikel erzeugt, wobei die Zusammensetzung **dadurch gekennzeichnet ist, dass** sie als raucherzeugendes Mittel nachchloriertes Polyvinylchlorid (C-PVC) umfasst, wobei der Chloranteil dieses raucherzeugenden Mittels zwischen 57 % und 70 % der nachchlorierten Polyvinylchloridmasse liegt, wobei die Zusammensetzung 49 bis 90 Ma% nachchloriertes Polyvinylchlorid (C-PVC) in Bezug auf die Gesamtmasse der Zusammensetzung umfasst.

2. Raucherzeugende Zusammensetzung nach Anspruch 1, **dadurch gekennzeichnet, dass** sie 5 bis 30 Ma% Reduktionsmittel, 5 bis 29 Ma% Oxidationsmittel, 0 % bis 30 % Bindemittel und 0 % bis 5 % Zusätze umfasst.

3. Raucherzeugende Zusammensetzung nach Anspruch 2, **dadurch gekennzeichnet, dass** das Reduktionsmittel aus den folgenden Körpern oder Verbindungen ausgewählt ist: Magnesium, Aluminium, Kalziumsilizid oder ihren Gemischen.

4. Raucherzeugende Zusammensetzung nach Anspruch 3, **dadurch gekennzeichnet, dass** das Oxidationsmittel aus den folgenden Verbindungen ausgewählt ist: Kaliumperchlorat (KClO4), Kaliumnitrat (KNO3), Kaliumpermanganat (KMnO4), Kaliumperiodat (KIO4), Polyvinylidenfluorid (PVDF), Polyfluorethylen (PTFE).

5. Raucherzeugende Zusammensetzung nach einem der Ansprüche 2 bis 4, **dadurch gekennzeichnet, dass** das Bindemittel aus den thermoplastischen Harzen, Polyurethanharz, den Epoxydharzen, hydroxy-telechelischem Polybutadien (HTPB), Dinitroanisol ausgewählt ist.

6. Raucherzeugende Zusammensetzung nach einem der Ansprüche 1 bis 5, **dadurch gekennzeichnet, dass** sie umfasst (Verhältnisse in Bezug auf die Gesamtmasse der Zusammensetzung):
15 % Magnesium,
8 % Kaliumperchlorat,
54 % nachchloriertes Polyvinylchlorid,
21 % Polyurethanharz,
2 % Graphit.

7. Raucherzeugende Zusammensetzung nach einem der Ansprüche 1 bis 5, **dadurch gekennzeichnet, dass** sie umfasst (Verhältnisse in Bezug auf die Gesamtmasse der Zusammensetzung):
20 % Kalziumsilizid,
29 % Kaliumnitrat,
49 % nachchloriertes Polyvinylchlorid,
2 % Graphit.

8. Raucherzeugende Zusammensetzung nach einem der Ansprüche 1 bis 5, **dadurch gekennzeichnet, dass** sie umfasst (Verhältnisse in Bezug auf die Gesamtmasse der Zusammensetzung):
20 % Magnesium,
10 % Kaliumperchlorat,
70 % nachchloriertes Polyvinylchlorid.

9. Raucherzeugende Zusammensetzung nach einem der Ansprüche 1 bis 5, **dadurch gekennzeichnet, dass** sie umfasst (Verhältnisse in Bezug auf die Gesamtmasse der Zusammensetzung):
20 % Magnesium,
20 % Kaliumperchlorat,
60 % nachchloriertes Polyvinylchlorid.

## Claims

1. A smoke composition effective in the visible and infrared ranges comprising at least one oxidant and at least one reducing agent as well as at least one smoke agent generating carbon particles, wherein this composition is **characterised in that** it comprises superchlorinated polyvinyl chloride (C-PVC) as the smoke agent, wherein the chlorine content of this smoke agent is between 57% and 70% of the weight of superchlorinated polyvinyl chloride, the composition comprising 49% to 90% by weight of superchlorinated polyvinyl chloride (C-PVC) relative to the total weight of the composition.

2. The smoke composition according to claim 1, **characterised in that** it comprises 5% to 30% by weight of reducing agent, 5% to 29% by weight of oxidant, 0% to 30% of binder and 0% to 5% of additives.

3. The smoke composition according to claim 2, **characterised in that** the reducing agent is selected from the following bodies or compounds: magnesium, aluminum, calcium silicide or mixtures thereof.

4. The smoke composition according to claim 3, **characterised in that** the oxidant is selected from the following compounds: potassium perchlorate (KClO4), potassium nitrate (KNO3), potassium permanganate (KMnO4), potassium periodate (KIO4), polyvinylidene fluoride (PVDF), polytetrafluoroethylene (PTFE).

5. The smoke composition according to one of claims 2 to 4, **characterised in that** the binder is selected from thermoplastic resins, polyurethane resin, epoxy resins, hydroxytelechelic polybutadiene (PBHT), dinitroanisole.

6. The smoke composition according to one of claims 1 to 5, **characterised in that** it comprises (proportions relative to the total weight of the composition):
15% of magnesium,
8% of potassium perchlorate,
54% of superchlorinated polyvinyl chloride,
21% of polyurethane resin,
2% of graphite.

7. The smoke composition according to one of claims 1 to 5, **characterised in that** it comprises (proportions relative to the total weight of the composition):
20% of calcium silicide,
29% of potassium nitrate,
49% of superchlorinated polyvinyl chloride,
2% of graphite.

8. The smoke composition according to one of claims 1 to 5, **characterised in that** it comprises (proportions with respect to the total weight of the composition):
20% of magnesium,
10% of potassium perchlorate,
70% of superchlorinated polyvinyl chloride.

9. The smoke composition according to one of claims 1 to 5, **characterised in that** it comprises (proportions relative to the total weight of the composition):
20% of magnesium,
20% of potassium perchlorate,
60% of superchlorinated polyvinyl chloride.
